# EUROPÄISCHE PATENTSCHRIFT

(11) **EP 1 908 933 B1**
(45) Veröffentlichungstag und Bekanntmachung des Hinweises auf die Patenterteilung: **12.08.2009**
(21) Anmeldenummer: 07110743.7
(22) Anmeldetag: 21.06.2007
(51) Int. Cl.: F01N 3/20

(54) **Abgasanlage für eine Brennkraftmaschine**
Exhaust gas system for an internal combustion engine
Système d'échappement pour moteur à combustion interne

(30) Priorität: 11.09.2006 DE 102006043225
(43) Veröffentlichungstag der Anmeldung: 09.04.2008
(73) Patentinhaber: J. Eberspächer GmbH & Co. KG, 73730 Esslingen (DE); Robert Bosch GmbH, 70469 Stuttgart (DE)
(72) Erfinder: Halbei, Julia, 73614 Schorndorf (DE); Rudelt, Josef, 73773, Aichwald (DE); Neumann, Felix, 73732, Esslingen (DE); Meiser, Sabine, 71332, Waiblingen (DE); Horn, Matthias, 71691, Freiberg (DE); Hofmann, Thomas-Christian, 71642, Ludwigsburg (DE)
(74) Vertreter: Bongen, Renaud & Partner

(56) Entgegenhaltungen:
- WO-A-20/05073524
- WO-A-20/06014129
- US-A1- 2003 070 424

## Beschreibung

Die vorliegende Erfindung betrifft eine Abgasanlage für eine Brennkraftmaschine, insbesondere in einem Fahrzeug, mit den Merkmalen des Oberbegriffs des Anspruchs 1.

Eine Abgasanlage einer Brennkraftmaschine weist üblicherweise wenigsten einen Abgasstrang auf, der die im Betrieb der Brennkraftmaschine anfallenden Abgase abführt und in eine Umgebung der Brennkraftmaschine bzw. eine Umgebung eines mit der Brennkraftmaschine ausgestatteten Kraftfahrzeugs ausstöße. Des Weiteren sind in modernen Abgasanlagen auch Einrichtungen zur Abgasreinigung vorgesehen, beispielsweise ein SCR-Katalysator zur katalytischen Reduktion. Bei einer derartigen Abgaseinrichtung werden die Stickoxide des Abgases unter Zuhilfenahme eines zuvor in den Abgasstrang über eine Einspritzeinrichtung eingedüsten Reduktionsmittels umgesetzt und dadurch eine Stickoxidemission (NOₓ) reduziert. Als Reduktionsmittel, wird beispielsweise Harnstoff eingesetzt. Durch die Hitze im Abgasstrom verdampft das Reduktionsmittel und zersetzt sich unter anderem zu einer Ammoniak-Vorstufe, welche im SCR-Katalysator mit den Stickoxiden zu Stickstoff und Wasser reagiert. Dabei ist die im SCR-Katalysator ablaufende chemische Reaktion umso erfolgreicher, je besser die Umsetzung des eingedüsten Reduktionsmittels in Dampf oder Gas ist.

Eine Abgasanlage der eingangs genannten Art ist beispielsweise aus der WO 2005/073524 A1 bekannt und umfasst einen abgasführenden Abgasstrang sowie eine Einspritzeinrichtung zum Eindüsen einer Flüssigkeit in den Abgasstrang. Dabei ist im Abgasstrang stromab der Einspritzeinrichtung eine Verdampfereinrichtung mit oder aus wenigstens einem rohrförmig ausgebildeten Blechkörper angeordnet, der sich in einer Längsrichtung des Abgasstrangs erstreckt und sowohl innen- als auch außenseitig einer im Abgasstrang transportierten Abgasströmung ausgesetzt ist.

Eine weitere Abgasanlage dieser Art ist aus der WO 2006/014129 A1 bekannt.

Die vorliegende Erfindung beschäftigt sich mit dem Problem, für eine Abgasanlage der eingangs genannten Art eine verbesserte Ausführungsform anzugeben, die sich insbesondere durch eine besonders gute Verdampfung der eingedüsten Flüssigkeit und eine einfache Montage auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, im Abgasstrang stromab der Einspritzeinrichtung eine Verdampfereinrichtung mit wenigstens einem rohrförmig ausgebildeten Blechkörper anzuordnen, welcher gezielt mit einem Reduktionsmittel besprüht und an seiner Innenseite und an seiner Außenmitte mit Abgas beaufschlagt ist, wodurch eine besonders schnelle Verdampfung des Reduktionsmittels erfolgen kann. Dabei erstreckt sich die Verdampfereinrichtung in der Längsrichtung des Abgasstrangs, wodurch sie den Strömungswiderstand im Abgasstrang nicht oder nur geringfügig erhöht. Außerdem nutzt die Erfindung die Erkenntnis, dass sich die eingespritzte Flüssigkeit zum größten Teil auf der Verdampfereinrichtung niederschlägt und nicht an eine kalte Innenwand des Abgasstranges gelangt, so dass die Flüssigkeit einerseits schnell verdampfen kann und andererseits Ablagerungen durch auf der kalten Innenwand des Abgasstranges auftreffende Flüssigkeit vermieden werden können. Fixiert wird die Verdampfereinrichtung dabei über wenigstens eine Klammereinrichtung, wobei sich die Klammereinrichtung federartig zwischen einer Innenwand des Abgasstrangs und der Verdampfereinrichtung verspannt, so dass die Verdampfereinrichtung über die Klammereinrichtung elastisch im Abgasstrang gehalten ist. Eine derartige Fixierung der Verdampfereinrichtung über die erfindungsgemäße Klammereinrichtung erleichtert eine Montage der Abgasanlage und wirkt sich darüber hinaus besonders günstig auf mögliche Temperaturdehnungen aus, welche von der federnden Klammereinrichtung besser aufgenommen werden können. Dabei kann die Klammereinrichtung einerseits mit der Verdampfereinrichtung und/oder andererseits mit dem Abgasstrang verbunden, insbesondere verschweißt sein.

In der Folge der verbesserten Verdampfung des Reduktionsmittels kann die jeweils nachfolgend erwünschte chemische Reaktion im SCR-Katalysator mit erhöhter Effizienz ablaufen, wodurch eine höhere Umsetzungsrate für NOₓ erzielt und dadurch eine geringere NOₓ-Emission erreicht werden kann.

Bei einer vorteilhaften Ausführungsform der erfindungsgemä-ßen Lösung weist die Verdampfereinrichtung ein Paket von im wesentlichen parallelen Blechkörpern, insbesondere von drei Blechkörpern auf. Drei derartige, eng aneinander anliegende rohrförmige Blechkörper bieten zum einen den Vorteil, eine große innere und äußere Oberfläche zu schaffen, wodurch eine große Verdampferfläche bereit gestellt werden kann und zum anderen bieten drei rohrförmige Blechkörper die Möglichkeit, diese platzsparend im Abgasstrang anzuordnen.

Bei einer weiteren vorteilhaften Ausführungsform sind die Einspritzeinrichtung und die Verdampfereinrichtung so aufeinander abgestimmt, dass die Einspritzeinrichtung die Flüssigkeit zumindest teilweise auf eine Innenseite oder auf eine Außenseite des wenigstens einen Blechkörpers der Verdampfereinrichtung aufsprüht. Hierdurch wird gezielt eine Verdampfung der eingespritzten Flüssigkeit an der Innen- bzw. an der Außenseite des wenigstens einen Blechkörpers herbeigeführt, die aufgrund ihrer exponierten Lage eine im Vergleich zu einer Innenwand des Abgasstranges höhere Temperatur aufweist und dadurch eine bessere Verdampfung bewirkt.

Zweckmäßig weist eine Wand des wenigstens einen Blechkörpers Perforationsöffnungen und/oder Strömungsumlenkelemente auf. Sowohl Perforationsöffnungen als auch Strömungsumlenkelemente bewirken Turbolenzen und Wirbelbildungen, welche zum einen die Verdampfungswirkung unterstützt und zum anderen eine besonders homogene Durchmischung des verdampften Reduktionsmittels mit dem Abgas bewirken. Daraus folgt im stromab gelegenen SCR-Katalysator eine hohe Umsetzungsrate von Stickoxiden, so dass die NOₓ-Emission gesenkt werden kann.

Vorzugsweise ist bei einer Ausführungsform die Verdampfereinrichtung zwischen ihren sich in Längsrichtung des Abgasstrangs erstreckenden Längsenden von einer Innenwand des Abgasstrangs beabstandet angeordnet. Hierdurch wird gewährleistet, dass die Verdampfereinrichtung beidseitig vom Abgas umströmt wird, was zu einer intensiven Wärmeübertragung zwischen dem Abgas und der Verdampfereinrichtung führt, so dass dieser ununterbrochen Wärme zugeführt wird. Die ununterbrochene Wärmezuführung bewirkt ein verbessertes Verdampfen der eingesprühten Flüssigkeit und gleicht den beim Verdampfen erfolgenden Energieverlust rasch aus. Die Verdampfung wird somit unterstützt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Prinzipdarstellung einer Abgasanlage,
- Fig. 2: einen Querschnitt durch die Abgasanlage im Bereich einer Verdampfereinrichtung,
- Fig. 3: einen Längsschnitt durch die Abgasanlage im Bereich der Verdampfereinrichtung.

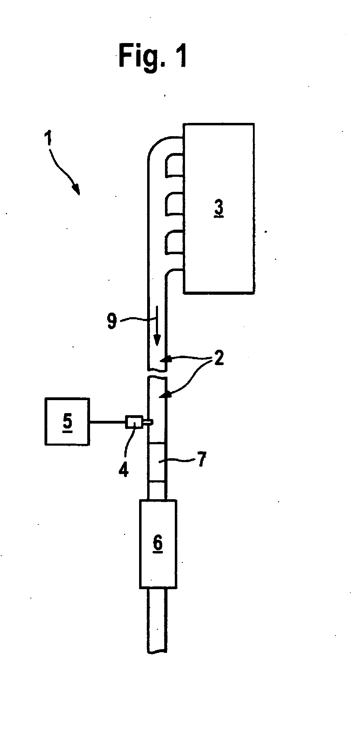

Entsprechend Fig. 1 weist eine Abgasanlage 1 wenigstens einen Abgasstrang 2 auf, welcher Abgas von einer Brennkraftmaschine 3 in die Umgebung abführt. Die Brennkraftmaschine 3 ist dabei vorzugsweise in einem Kraftfahrzeug angeordnet. Darüber hinaus umfasst die Abgasanlage 1 zumindest eine Einspritzeinrichtung 4, mit Hilfe welcher eine Flüssigkeit in den Abgasstrang 2 eingespritzt bzw. eingedüst werden kann. Wie der Fig. 1 zu entnehmen ist, ist der Abgasstrang 2 unterbrochen und nicht vollständig dargestellt, da zum einen zwischen dem mit der Brennkraftmaschine 3 verbundenen Abschnitt und dem der Einspritzeinrichtung 4 zugeordneten Abschnitt, sowie zum anderen stromab des dargestellten, mit der Einspritzeinrichtung 4 gekoppelten Abschnitts weitere Komponenten in die Abgasanlage 1 eingebunden sein können, wie beispielsweise ein Katalysator oder ein Schalldämpfer.

An ihrem, dem Abgasstrang 2 abgewandten Ende ist die Einspritzeinrichtung 4 beispielsweise mit einer Dosiereinrichtung 5 verbunden, welche der Einspritzeinrichtung 4 die Flüssigkeit zum Eindüsen zuführt. Bei der Flüssigkeit handelt es sich beispielsweise um ein flüssiges Reduktionsmittel, wie beispielsweise wässrige Lösungen von Harnstoff oder Harnstoff-Ammoniumformiat-Gemischen (z.B. Denoxium^{™}, von der Firma. Kemira, Finnland). Stromab der Einspritzeinrichtung 4, also stromab des Injektionsortes der Flüssigkeit, ist im Abgasstrang 2 ein SCR-Katalysator 6 angeordnet, der mit Hilfe des über die Einspritzeinrichtung 4 eingedüsten Reduktionsmittel Stickoxide, welche im Abgas mitgeführt werden, reduziert und dadurch eine Stickoxid-Emission (NOₓ-Emission) verringert. Die in den Abgasstrang 2 eingedüste Flüssigkeit, insbesondere das Reduktionsmittel, verdampft im heißen Gasstrom des Abgases und zersetzt sich unter anderem zu einer Ammoniak-Vorstufe, die im SCR-Katalysator 6 mit den Stickoxiden zu Stickstoff und Wasser reagiert.

Selbstverständlich kann die Einspritzeinrichtung 4 bei einer anderen Ausführungsform auch zum Eindüsen einer anderen Flüssigkeit, insbesondere eines Brennstoffes, vorgesehen werden, mit welchem die Brennkraftmaschine 3 betrieben wird. Bei einer derartigen Ausführungsform ist dann stromab der Einspritzeinrichtung 4 ein Oxidationskatalysator angeordnet, welcher mit Hilfe des eingespritzten Brennstoffes aufgeheizt werden kann, um eine Kaltstartphase der Brennkraftmaschine 3 zu verkürzen.

Erfindungsgemäß ist nun im Abgasstrang 2 stromab der Einspritzeinrichtung 4 und stromauf des SCR-Katalysators 6 eine Verdampfereinrichtung 7 mit wenigstens einem rohrförmig ausgebildeten Blechkörper 8 angeordnet, der sich in einer Längsrichtung des Abgasstranges 2 erstreckt und sowohl innen- als auch außenseitig einer im Abgasstrang 2 transportierten Abgasströmung ausgesetzt ist. Der zumindest eine Blechkörper 8 der Verdampfereinrichtung 7 fungiert dabei als Verdampfungshilfe und verbessert den Verdampfungsgrad der eingespritzt Flüssigkeit.

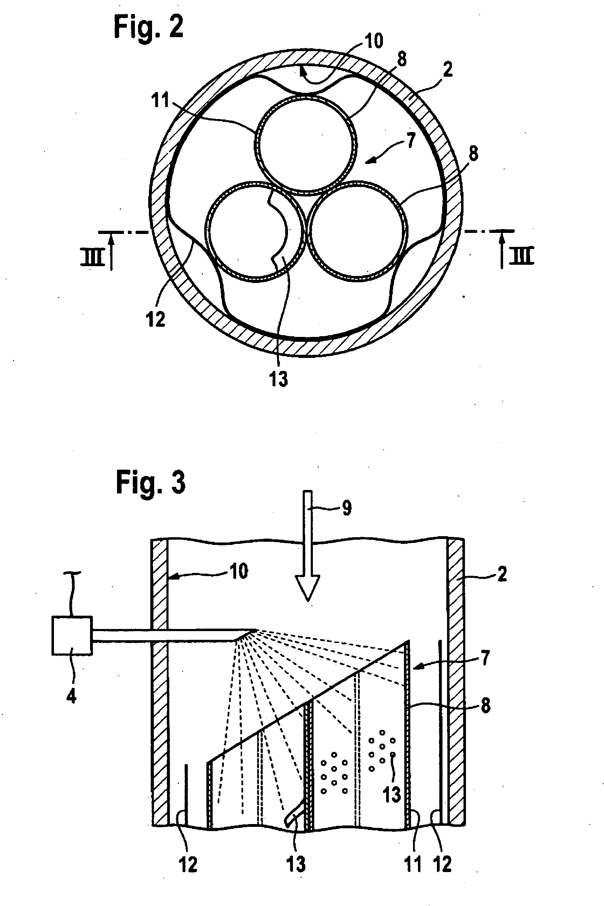

Gemäß den Fig. 2 und 3 weist die Verdampfereinrichtung 7 insgesamt drei rohrförmige Blechkörper 8 auf, welche sich in einer Längsrichtung des Abgasstranges 2 erstrecken. Dabei ist die Strömungsrichtung des im Betrieb der Brennkraftmaschine 3 im Abgasstrang 2 strömenden Abgases durch einen Pfeil symbolisiert und mit 9 bezeichnet (vgl. Fig. 3).

Sämtliche Wände 11 der Blechkörper 8 sind, wie oben erwähnt, sowohl innenseitig als auch außenseitig der im Abgasstrang 2 strömenden Abgasströmung ausgesetzt und erwärmen sich dadurch relativ rasch. Insbesondere erfolgt eine Erwärmung deutlich schneller als die Erwärmung einer Innenwand 10 des Abgasstranges 2. Durch die schnellere Erwärmung der Wände 11 der Blechkörper 8 wirken diese auch in der Kaltstartphase als Verdampfungshilfe, sofern über die Einspritzeinrichtung 4 Flüssigkeit, insbesondere ein Reduktionsmittel, mit den Wänden 11 in Kontakt kommt bzw. auf diese aufgesprüht wird.

Generell weisen die Verdampfereinrichtungen 7 gemäß den Fig. 2 und 3 jeweils insgesamt drei Blechkörper 8 auf, wobei auch ein größeres oder kleineres Paket von im wesentlichen parallel angeordneten Blechkörpern 8 von der Erfindung mit umfasst sein soll.

Eine Fixierung der Verdampfereinrichtung 7 bzw. der dazu gehörigen Blechkörper 8 im Abgasstrang 2 erfolgt über zumindest eine federartig ausgebildete Klammereinrichtung 12, welche die Verdampfereinrichtung 7 federnd gegen die Innenwand 10 des Abgasstranges 2 verspannt. Die Klammereinrichtung 12 erleichtert dabei den Einbau der Verdampfereinrichtung 7 in den Abgasstrang 2 erheblich, da ein bisher erforderliches Verschweißen der Verdampfereinrichtung 7 mit dem Abgasstrang 2 entfallen kann. Gleichzeitig ist die Klammereinrichtung 12 in der Lage, Temperaturspannungen, die aufgrund der unterschiedlichen Betriebstemperaturen im Abgasstrang 2 auftreten können, elastisch aufzunehmen, wodurch insbesondere kritische Spannungsspitzen abgemildert werden können. Im Vergleich zu einer mit dem Abgasstrang 2 über eine Schweißverbindung verbundene Verdampfereinrichtung 7 können durch die elastische Klammereinrichtung 12 kritische Zwangszustände verhindert werden. Die Klammereinrichtung 12 kann dabei aus einem hitzebeständigen Material, beispielsweise aus Blech- oder Federstahl, ausgebildet sein.

Um im SCR-Katalysator 6 eine möglichst hohe NOₓ-Umsetzungsrate erreichen zu können, ist es wichtig, dass die Aufbereitung des Reduktionsmittels bis zum Katalysator soweit fortgeschritten ist, dass es vorzugsweise vollständig verdampft und homogen im Abgas verteilt ist. Je nach Spraygüte und Betriebsbedingungen werden hierfür jedoch relativ lange Verdampfungs- bzw. Zersetzungsstrecken benötigt. Um diese deutlich verkürzen zu können, ist die erfindungsgemäße Verdampfereinrichtung 7 stromab der Einspritzeinrichtung 4 angeordnet. Dabei stellen die einzelnen Blechkörper 8 der Verdampfereinrichtung 7 eine große Prall- und Verdampfungsoberfläche für das über Einspritzeinrichtung 4 eingespritzte flüssige Reduktionsmittel zu Verfügung, wodurch dieses auf einer relativ kurzen Strecke, spätestens jedoch bis zum Eintritt in den SCR-Katalysator 6 verdampft ist. Durch die sowohl innenseitige als auch außenseitige Umströmung der Verdampfereinrichtung 7 erwärmt sich diese, wie oben erwähnt, deutlich schneller als die Innenwand 10 des Abgasstranges 2, so dass auch in der Kaltstartphase der Brennkraftmaschine 3 bereits eine zufriedenstellende Verdampfung des Reduktionsmittels erreicht werden kann. Insbesondere werden durch die erfindungsgemäße Verdampfereinrichtung 7 auch Ablagerungen, wie sie beim Aufsprühen von Reduktionsmittel auf die kalte Innenwand 10 des Abgasstranges 2 entstehen würden, verhindert werden.

Gemäß der Fig. 3 sind die Einspritzeinrichtung 4 und die Verdampfereinrichtung 7 so aufeinander abgestimmt, dass die Einspritzeinrichtung 4 die Flüssigkeit, z.B. das Reduktionsmittel, zumindest teilweise auf eine Innenseite und/oder auf eine Außenseite des wenigstens einen Blechkörpers 8 aufsprüht. Um dabei einen bestmöglichen Ein- bzw. Auftrag der Flüssigkeit in bzw. auf die Verdampfereinrichtung 7 erreichen zu können, sind die Blechkörper 8 an einem der Einspritzeinrichtung 4 zugewandten Ende schräg angeschnitten. Denkbar ist auch, dass sie anderweitige Ausschnitte aufweisen, welche eine verbesserte Einspritzung bzw. einen verbesserten Auftrag des flüssigen Reduktionsmittels in bzw. auf die Blechkörper 8 bewirken.

Um neben dem ausreichenden Verdampfen auch eine ausreichende Homogenität des Abgasgemisches erreichen zu können, kann in zumindest einer Wand 11 des Blechkörpers 8 wenigstens eine Perforationsöffnung vorgesehen sein oder es können Strömungsumlenkelemente 13, wie beispielsweise Laschen oder Flügel, an zumindest einem Blechkörper 8 angeordnet sein, welche zusätzliche Turbolenzen bzw. Verwirbelungen und dadurch ein gutes Vermischen des Abgasgemisches bewirken.

Generell ist die Verdampfereinrichtung 7 zwischen ihren sich in Längsrichtung des Abgasstranges 2 erstreckenden Längsenden von der Innenwand 10 des Abgasstranges 2 beabstandet angeordnet. Dies gewährleistet, dass die Wände 11 der Blechkörper 8 beidseitig vom Abgas umströmt werden und so eine intensive Wärmeübertragung zwischen dem Abgas und den Blechkörpern 8 erreicht wird. Dies ist insbesondere von großem Vorteil, da hierdurch der Verdampfungsprozess kontinuierlich aufrecht erhalten werden kann und die beim Verdampfen der eingesprühten Flüssigkeit abgehende Verdampfungswärme rasch ausgeglichen werden kann.

Entsprechend der Fig. 3 ist ein stromauf liegendes Stirnende der Blechkörper 8 der Verdampfereinrichtung 7 als Anströmkante ausgebildet, welche das Umströmen der jeweiligen Wände 11 der Blechkörper 8 erleichtert und dadurch den Strömungswiderstand reduziert. Auf entsprechende Weise kann auch ein stromab abliegendes, hier nicht erkennbares Stirnende der jeweiligen Blechkörper 8 als Abströmkante ausgestaltet sein, wodurch ebenfalls der Strömungswiderstand reduziert wird.

Wie in der Fig. 2 und 3 dargestellt, ist die Verdampfereinrichtung 7 im wesentlichen zentral im Abgasstrang 2 angeordnet und achsparallel bzw. koaxial zum Abgasstrang 2 ausgerichtet. Die achsparallele bzw. koaxiale Anordnung der Verdampfereinrichtung 7 im Abgasstrang 2 reduziert dabei zusätzlich den Strömungswiderstand. Die zentrale Anordnung der Verdampfereinrichtung 7 im Abgasstrang 2 ist zudem lediglich als eine mögliche Ausführungsform zu betrachten, so dass auch eine desaxierte bzw. dezentrale Anordnung der Verdampfereinrichtung 7 im Abgasstrang 2 von der Erfindung mit umfasst sein soll, sofern diese einen günstigen Einfluss auf die Verdampferleistung bzw. auf den Strömungswiderstand bewirkt.

## Patentansprüche

1. Abgasanlage (1) für eine Brennkraftmaschine (3), insbesondere in einem Kraftfahrzeug,
- mit wenigstens einem abgasführenden Abgasstrang (2),
- mit einer Einspritzeinrichtung (4) zum Eindüsen einer Flüssigkeit in den Abgasstrang (2),
- wobei im Abgasstrang (2) stromab der Einspritzeinrichtung (4) eine Verdampfereinrichtung (7) mit oder aus wenigstens einem rohrförmig ausgebildeten Blechkörper (8) angeordnet ist, der sich in einer Längsrichtung des Abgasstrangs (2) erstreckt und sowohl innen- als auch außenseitig einer im Abgasstrang (2) transportierten Abgasströmung ausgesetzt ist,
**dadurch gekennzeichnet,**
**dass** wenigstens eine federartig ausgebildete Klammereinrichtung (12) vorgesehen ist, die die Verdampfereinrichtung (7) im Abgasstrang (2) fixiert.

2. Abgasanlage nach Anspruch 1,
**dadurch gekennzeichnet,**
**dass** die Verdampfereinrichtung (7) ein Paket von im Wesentlichen parallelen Blechkörpern (8), insbesondere von drei Blechkörpern aufweist.

3. Abgasanlage nach Anspruch 1 oder 2,
**dadurch gekennzeichnet,**
**dass** die Einspritzeinrichtung (4) und die Verdampfereinrichtung (7) so aufeinander abgestimmt sind, dass die Einspritzeinrichtung (4) die Flüssigkeit zumindest teilweise auf eine Innenseite oder auf eine Außenseite des wenigstens einen Blechkörpers (8) aufsprüht.

4. Abgasanlage nach einem der Ansprüche 1 bis 3,
**dadurch gekennzeichnet,**
**dass** die Verdampfereinrichtung (7) zwischen ihren sich in Längsrichtung des Abgasstrangs (2) erstreckenden Längsenden von einer Innenwand (10) des Abgasstrangs (2) beabstandet angeordnet ist.

5. Abgasanlage nach einem der Ansprüche 1 bis 4,
**dadurch gekennzeichnet,**
**dass** wenigstens ein Blechkörper (8) an zumindest einem sich in der Längsrichtung des Abgasstrangs (2) erstreckenden Längsende schräg angeschnitten ist oder einen Ausschnitt aufweist.

6. Abgasanlage nach einem der Ansprüche 1 bis 5,
**dadurch gekennzeichnet,**
**dass** eine Wand (11) des wenigstens einen Blechkörpers (8) Perforationsöffnungen und/oder Strömungsumlenkelemente (13) aufweist.

7. Abgasanlage nach einem der Ansprüche 1 bis 6,
**dadurch gekennzeichnet,**
- **dass** ein stromauf liegendes Stirnende wenigstens eines Blechkörpers (8) der Verdampfereinrichtung (7) als Anströmkante ausgestaltet ist, und/oder
- **dass** ein stromab liegendes Stirnende wenigstens eines Blechkörpers (8) der Verdampfereinrichtung (/) als Abströmkante ausgestaltet ist.

8. Abgasanlage nach einem der Ansprüche 4 bis 7,
**dadurch gekennzeichnet,**
- **dass** sich die wenigstens eine Klammereinrichtung (12) einerseits an der Verdampfereinrichtung (7) und andererseits an der Innenwand (10) des Abgasstrangs (2) abstützt, und/oder
- **dass** die wenigstens eine Klammereinrichtung (12) die Verdampfereinrichtung (7) federelastisch gegenüber der Innenwand (10) des Abgasstrangs (2) verspannt.

9. Abgasanlage nach einem der Ansprüche 1 bis 8,
**dadurch gekennzeichnet,**
- **dass** die Verdampfereinrichtung (7) im wesentlichen zentral im Abgasstrang (2) angeordnet ist, und/oder
- **dass** die Verdampfereinrichtung (7) achsparallel und/oder koaxial im Abgasstrang (2) angeordnet ist.

10. Abgasanlage nach einem der Ansprüche 1 bis 9,
**dadurch gekennzeichnet,**
**dass** im Abgasstrang (2) stromab der Verdampfereinrichtung (7) ein SCR-Katalysator (6) angeordnet ist.

## Claims

1. An exhaust system (1) for an internal combustion engine (3) more preferably in a motor vehicle,
- with at least one exhaust gas train (2) carrying exhaust gas,
- with an injection device (4) for injecting a liquid into the exhaust gas train (2),
- wherein in the exhaust gas train (2) downstream of the injection device (4) an evaporator device (7) with or of at least one sheet metal body (8) of tubular design is arranged which extends in a longitudinal direction of the exhaust gas train (2) and both inside as well as outside is exposed to an exhaust gas flow transported in the exhaust gas train (2),
**characterized in**
**that** at least one clamping device (12) designed spring-like is provided which fixes the evaporator device (7) in the exhaust gas train (2).

2. The exhaust system according to Claim 1,
**characterized in**
**that** the evaporator device (7) comprises a package of substantially parallel sheet metal bodies (8), more preferably of three sheet metal bodies.

3. The exhaust system according to Claim 1 or 2,
**characterized in**
**that** the injection device (4) and the evaporator device (7) are so matched to each other that the injection device (4) at least partially sprays the liquid on to an inside or an outside of the at least one sheet metal body (8).

4. The exhaust system according to any one of the Claims 1 to 3,
**characterized in**
**that** the evaporator device (7) is arranged spaced from an inner wall (10) of the exhaust gas train (2) between its longitudinal ends extending in longitudinal direction of the exhaust gas train (2).

5. The exhaust system according to any one of the Claims 1 to 4,
**characterized in**
**that** at least one sheet metal body (8) on at least one longitudinal end extending in the longitudinal direction of the exhaust gas train (2) is cut obliquely or comprises a cut-out.

6. The exhaust system according to any one of the Claims 1 to 5,
**characterized in**
**that** a wall (11) of the at least one sheet metal body (8) comprises perforation openings and/or flow deflection elements (13).

7. The exhaust system according to any one of the Claims 1 to 6,
**characterized in**
- **that** a face end of at least one sheet metal body (8) of the evaporator device (7) located upstream is designed as leading edge and/or
- **that** a face end of at least one sheet metal body (8) of the evaporator device (7) located downstream is designed as trailing edge.

8. The exhaust system according to any one of the Claims 4 to 7,
**characterized in**
- **that** the at least one clamping device (12) on the one side supports itself on the evaporator device (7) and on the other side on the inner wall (10) of the exhaust gas train (2) and/or
- in that the at least one clamping device (12) clamps the evaporator device (7) resiliently relative to the inner wall (10) of the exhaust gas train (2).

9. The exhaust system according to any one of the Claims 1 to 8,
**characterized in**
- **that** the evaporator device (7) is substantially arranged centrally in the exhaust gas train (2) and/or
- in that the evaporator device (7) is arranged parallel with the axis of and/or coaxially in the exhaust gas train (2).

10. The exhaust system according to any one of the Claims 1 to 9,
**characterized in**
**that** in the exhaust gas train (2) an SCR catalytic converter (6) is arranged downstream of the evaporator device (7).

## Revendications

1. Installation d'échappement (1) pour un moteur à combustion interne (3), en particulier sur un véhicule automobile comprenant
- au moins une branche d'échappement (2) évacuant des gaz brûlés,
- un dispositif d'injection (4) pour l'injection par buse d'un liquide dans la branche d'échappement (2),
- un dispositif évaporateur (7) étant disposé dans la branche d'échappement (2) en aval du dispositif d'injection (4), comprenant ou constitué d'au moins un corps en tôle (8) conçu avec une forme tubulaire, qui s'étend dans une direction longitudinale de la branche d'échappement (2) et est exposé aussi bien côté intérieur que côté extérieur à un écoulement de gaz brûlés transportés dans la branche d'échappement (2),
**caractérisée en ce que**
il est prévu au moins un dispositif de retenue (12) réalisé en forme de ressort, qui fixe le dispositif évaporateur (7) dans la branche d'échappement (2).

2. Installation d'échappement selon la revendication 1,
**caractérisée en ce que**
le dispositif évaporateur (7) présente un ensemble de corps en tôle (8) sensiblement parallèles, en particulier de trois corps en tôle.

3. Installation d'échappement selon la revendication 1 ou 2,
**caractérisée en ce que**
le dispositif d'injection (4) et le dispositif évaporateur (7) sont adaptés l'un à l'autre de telle sorte que le dispositif d'injection (4) pulvérise le liquide au moins en partie sur un côté intérieur ou sur un côté extérieur du au moins un corps en tôle (8).

4. Installation d'échappement selon l'une quelconque des revendications 1 à 3,
**caractérisée en ce que**
le dispositif évaporateur (7) est disposé entre ses extrémités longitudinales s'étendant dans le sens longitudinal de la branche d'échappement (2) à distance d'une paroi intérieure (10) de la branche d'échappement (2).

5. Installation d'échappement selon l'une quelconque des revendications 1 à 4,
**caractérisée en ce que**
au moins un corps en tôle (8) est entaillé en biais ou présente une découpe sur au moins une extrémité longitudinale s'étendant dans le sens longitudinal de la branche d'échappement (2).

6. Installation d'échappement selon l'une quelconque des revendications 1 à 5,
**caractérisée en ce que**
une paroi (11) du au moins un corps en tôle (8) présente des ouvertures de perforation et/ou des éléments de déviation d'écoulement (13).

7. Installation d'échappement selon l'une quelconque des revendications 1 à 6,
**caractérisée en ce que**
- une extrémité avant située en amont d'au moins un corps en tôle (8) du dispositif évaporateur (7) est conçue comme arête d'arrivée du courant, et/ou
- une extrémité avant située en aval d'au moins un corps en tôle (8) du dispositif évaporateur (7) est conçue comme arête de départ du courant.

8. Installation d'échappement selon l'une quelconque des revendications 4 à 7,
**caractérisée en ce que**
- le au moins un dispositif de retenue (12) s'appuie d'une part sur le dispositif évaporateur (7) et d'autre part sur la paroi intérieure (10) de la branche d'échappement (2), et/ou
- le au moins un dispositif de retenue (12) tend le dispositif évaporateur (7) de façon élastique comme un ressort par rapport à la paroi intérieure (10) de la branche d'échappement (2).

9. Installation d'échappement selon l'une quelconque des revendications 1 à 8,
**caractérisée en ce que**
- le dispositif évaporateur (7) est disposé de façon sensiblement centrale dans la branche d'échappement (2), et/ou
- le dispositif évaporateur (7) est disposé de façon parallèle à l'axe et/ou de façon axiale dans la branche d'échappement (2).

10. Installation d'échappement selon l'une quelconque des revendications 1 à 9,
**caractérisée en ce que**
un catalyseur SCR (6) est disposé dans la branche d'échappement (2) en aval du dispositif évaporateur (7).
